# EUROPÄISCHE PATENTSCHRIFT

(11) **EP 4 631 754 B1**
(45) Veröffentlichungstag und Bekanntmachung des Hinweises auf die Patenterteilung: **21.01.2026**
(21) Anmeldenummer: 24169014.8
(22) Anmeldetag: 08.04.2024
(51) Int. Cl.: B60K 1/04, B60L 50/64, H01M 50/224, B21D 22/20, B21D 53/88, B21D 51/18

(54) **WARMGEFORMTE UND PRESSGEHÄRTETE BATTERIEWANNE**
THERMOFORMED AND PRESS-HARDENED BATTERY TRAY
BAC DE BATTERIE FORMÉ À CHAUD ET DURCI À LA PRESSE

(43) Veröffentlichungstag der Anmeldung: 15.10.2025
(73) Patentinhaber: Benteler Automobiltechnik GmbH, 33102 Paderborn (DE)
(72) Erfinder: Brüggemann, Thomas, 33415 Verl (DE); Buse, Christian, 33165 Lichtenau (DE); Frischkorn, Conrad, 33102 Paderborn (DE); HANDING, Christian, 33449 Langenberg (DE)
(74) Vertreter: Osterhoff, Utz

(56) Entgegenhaltungen:
- EP-A1- 4 318 760
- CN-A- 115 732 831
- DE-A1- 102017 102 699
- DE-A1- 102018 110 519

## Beschreibung

Die vorliegende Erfindung betrifft eine warmumgeformte und pressgehärtete Batteriewanne für ein Elektrofahrzeug gemäß den Merkmalen im Oberbegriff von Anspruch 1.

Aus dem Stand der Technik ist es bekannt, für Kraftfahrzeuge, insbesondere in der Elektromobilität Battery Trays einzusetzen. Solche Battery Trays weisen eine Batteriewanne zur Aufnahme von Antriebsbatterien auf. Die Batteriewanne wird mit einem Deckel verschlossen. Eine solche Batteriewanne ist zumeist im Unterflurbereich eines Kraftfahrzeuges angeordnet. Die Batteriewanne erstreckt sich zumeist über einen großen Teil des Unterflurbereiches, insbesondere der Fahrgastzelle. Seitlich im Bereich der Schweller sind Längsseiten der Batteriewanne ausgebildet. Kopf- und heckseitig sind Querseiten ausgebildet. Die Querseiten sind kürzer als die Längsseiten.

Aus dem Stand der Technik ist weiterhin, beispielsweise aus der DE 10 2016 116 729 B4 ein Batteriegehäuse für ein elektromotorisch angetriebenes Fahrzeug bekannt, das mit einem Tiefziehprozess hergestellt ist.

Aus der CN 115 732 831 A ist ein Batterieträger bekannt, der durch Warmumformen und Presshärten hergestellt ist.

Aufgabe der vorliegenden Erfindung ist es, ausgehend vom Stand der Technik, eine Batteriewanne bereitzustellen, die gegenüber dem Stand der Technik vereinfacht hergestellt werden kann, in Bezug auf den inneren Aufnahmeraum zur Aufnahme von Batterien optimiert ist sowie in ihrer Crashfähigkeit im Fall eines Kraftfahrzeuges verbessert ist.

Die zuvor genannte Aufgabe wird erfindungsgemäß bei einer Batteriewanne mit den Merkmalen im Anspruch 1 gelöst.

Vorteilhafte Ausgestaltungsvarianten der vorliegenden Erfindung sind in den abhängigen Ansprüchen beschrieben.

Die Batteriewanne ist für ein Elektrofahrzeug bzw. Elektrokraftfahrzeug vorgesehen. Sie wird hergestellt als warmumgeformtes und pressgehärtetes Bauteil aus einer Stahlblechplatine. Die Stahlblechplatine ist bevorzugt aus einer härtbaren Stahllegierung bereitgestellt, beispielsweise 22MnB5. Für das Warmumformen und Presshärten kann die Platine beispielsweise ein Zunder- bzw. Korrosionsschutzschicht aufweisen. Diese kann auf Aluminium-Silicium-Basis oder Zink-Basis oder einer Kombination daraus vorhanden sein. Die Materialstärke liegt zwischen 0,8 mm und 2,5 mm, bevorzugt zwischen 1,0 mm und 2,2 mm, besonders bevorzugt zwischen 0,8 mm und 1,5 mm. Für das Warmumformen wird zunächst auf über Austenitisierungstemperatur, mithin auf über 900° C erhitzt, dann in einer Presse warm umgeformt und anschließend abgekühlt bzw. abschreckgehärtet. Hierbei können Zugfestigkeiten Rm größer 1000 MPa, insbesondere größer 1350 MPa zumindest abschnittsweise bevorzugt vollflächig in der gesamten Batteriewanne hergestellt werden.

Die Batteriewanne selbst weist ein wannenförmiges Gehäuse auf. Hierzu ist ein Boden vorgesehen. Der Boden ist bevorzugt eben bzw. flach ausgebildet. In dem Boden selbst können jedoch verschiedene Verstärkungssicken oder Querstreben mit eingebracht sein. Diese Verstärkungsstrukturen können die Steifigkeit des Bodens erhöhen. Die Verstärkungsstrukturen können jedoch auch die Crashsteifigkeit erhöhen. Auch können Sicken in den Boden eingebracht sein, so dass sich bei weiterer Kopplung mit einem weiteren Blech des Bodens eine Kühlkanalstruktur ergibt, dergestalt, dass bei Durchleitung eines Kühlmediums der Boden als Kühlboden für die in der Batteriewanne angeordneten Batterien vorgesehen sein kann.

Von dem Boden erstrecken sich bzw. auf die Kraftfahrzeugvertikalrichtung bezogen erheben sich Seitenwände. An einem oberen Bereich der Seitenwände ist ein an der Batteriewanne umlaufender nach außen abstehender Flansch ausgebildet. Dieser Flansch dient zum einen der Versteifung, zum anderen jedoch, um hier die Batteriewanne mit einem Deckel zu verschließen.

Erfindungsgemäß zeichnet sich die Batteriewanne dadurch aus, dass die Seitenwände an Längsseiten, nachfolgend auch Längsseitenwand genannt, der Batteriewanne und die Seitenwände an Querseiten mithin Kopf- und Heckseite, nachfolgend auch Querseitenwände genannt, in einem Winkel größer 1° zu einer Vertikalen bzw. zu der Kraftfahrzeugvertikalrichtung im eingebauten Zustand der Batteriewanne, orientiert verlaufen. Erfindungsgemäß ist weiterhin vorgesehen, dass der Winkel der Längsseitenwände größer ist als der Winkel der Querseitenwände. Hierdurch hat sich ein Optimum ergeben, aus Herstellbarkeit im Tiefziehprozess bzw. Pressumformprozess und zur Verfügung stehendem Bauraum zur Aufnahme von Batterien. Ferner ist der Bauraum insbesondere optimiert für elektrische Anschlüsse der Batteriemodule innerhalb der Batteriewanne sowie den Anschluss eines Kühlsystems, welches ebenfalls die Batteriewanne durchleitend bzw. durchgreifend ausgebildet sein kann. Ferner ergeben sich verbesserte Crasheigenschaften im Frontal- bzw. Seitencrash, dadurch, dass mindestens eine der Wände steiler ist, also eine geringere Neigung zu einer Vertikalen aufweist. Insbesondere sind dies immer zwei gegenüberliegende Wände, die die gleiche Neigung aufweisen.

Erfindungswesentlich ist, dass die Seitenwände, die in Kraftfahrzeugquerrichtung verlaufen, sich von einer linken zu einer rechten Seite des Kraftfahrzeuges erstrecken, steiler stehen, also eine geringere Neigung zu einer Vertikalen aufweisen. Die Seitenwände, die in Kraftfahrzeuglängsrichtung verlaufen, also von einer Fahrzeugfront zu einem Fahrzeugheck sind hingegen weniger steil ausgebildet, bezogen auf den Querschnitt, insbesondere in einem größeren Winkel zur Vertikalen liegend als die Seitenwände, die quer zum Fahrzeug verlaufen.

Bevorzugt ist der Winkel zur Vertikalen der Querseitenwände 1° bis 6°. Besonders bevorzugt beträgt der Winkel 2° bis 6°, bevorzugt 3° bis 6°. Der Winkel der Längsseitenwände zur Vertikalen beträgt bevorzugt 8° bis 20°, insbesondere 13° bis 20°.

Durch die verschiedenen Winkel von Querseitenwänden und Längsseitenwänden ergibt sich im jeweiligen Übergangsbereich von Querseitenwand zu Längsseitenwand eine unsymmetrische Gestaltung der Ecken bzw. Eckbereiche.

In weiterhin bevorzugter Ausgestaltung sind die Ecken bzw. Eckbereiche nach außen versetzt angeordnet bzw. ausgeformt. Nach außen bezieht sich auf den Innenraum der Batteriewanne. Gegenüber der Querseitenwand und/oder Längsseitenwand ist dann ein jeweiliger Eckbereich zumindest abschnittsweise auf die Kraftfahrzeuglängs- und/oder -querrichtung bezogen nach außen versetzt. Dies bedeutet, zumindest ein Teil des Eckbereiches steht nach außen über die Querseitenwand bzw. Längsseitenwand über. Dies bietet wiederum verschiedene Vorteile. Zum einen ist eine Optimierung des Umformprozesses gegeben. Es hat sich erfindungsgemäß herausgestellt, dass die lokalen Abstreckgrade bei der Herstellung der Ecken dadurch verringert werden, so dass es hier nicht zu einem Brechen oder Reißen kommt.

Weiterhin wird der in der Batteriewanne zur Verfügung stehende Bauraum durch die nach außen ausgeformten Ecken bzw. Eckbereiche optimiert. Ferner ist eine verbesserte Crashperformance gegeben, da zum einen der Eckbereich durch die Nachaußenformung versteift ist. Darüber hinaus steht der Eckbereich über und kann somit im Crashfall nach dem Prinzip einer Crashbox einen initialen Stoß mildern. Ein weiterer Vorteil der nach außen ausgeformten Ecke besteht darin, dass ein außen bzw. innen an den jeweiligen Seitenwänden angefügter Crashrahmen längenabschnittsweise verkürzt ausgeführt werden kann, so dass Material und Gewichtseinsparungen zu verzeichnen sind. Insbesondere kann somit beispielsweise außen- und/oder innenseitig an die Seitenwand ein Verstärkungsprofil angesetzt werden. Im jeweiligen Querschnitt ergibt sich dann ein Hohlprofil. Das Verstärkungsprofil muss jedoch längenabschnittsweise nicht über die gesamte Seitenwand verlaufen. Das Verstärkungsprofil verläuft längenabschnittsweise dann nur bis zum Beginn des Eckbereiches, kann jedoch auch darüber hinauslaufen.

Weiterhin sind die Eckbereiche erfindungsgemäß derart ausgeführt, dass sich aus der Bodenebene mit einer kontinuierlich zunehmenden Krümmung eine gekrümmte Ebene erhebt. Die Ebene ist um eine 2-Punktlinie gekrümmt ausgebildet, wobei sich die 2-Punktlinie in der xy-Ebene, mithin in der durch die Kraftfahrzeugquer- und Kraftfahrzeuglängsrichtung aufgespannten Ebene befindet. Um diese Gerade bzw. 2-Punktlinie ist dann die Krümmung einer Eckenebene ausgebildet. Die gekrümmte Fläche ist somit zweidimensional gekrümmt nicht jedoch dreidimensional. Dies bedeutet im Rahmen der Erfindung, dass die Ebene eine abschnittsweise zylinderflächige Krümmung aufweist, nicht jedoch eine abschnittsweise kugelförmige Krümmung. An dem jeweiligen Übergang der gekrümmten Fläche zu der Querseitenwand bzw. Längsseitenwand ist dann ein Radius ausgebildet, mit dem die gekrümmte Fläche in die jeweilige Seitenwand übergeht.

Die gekrümmte Fläche erstreckt sich auf die Kraftfahrzeugvertikalrichtung bezogen, bevorzugt maximal über 85 % der Höhe der Batteriewanne, insbesondere über ca. 50 % bis 75 % der Höhe der Batteriewanne. Der verbleibende Höhenabschnitt der Batteriewanne bzw. Seitenwände ist dann als übergehender Radius von Querseitenwand zu Längsseitenwand ausgebildet, wobei der Radius sich verändern kann. Die Höhe der Batteriewanne beträgt bevorzugt mehr als 50 mm, bevorzugt größer 80 mm, insbesondere mehr als 100 mm, jedoch nicht mehr als 150 mm.

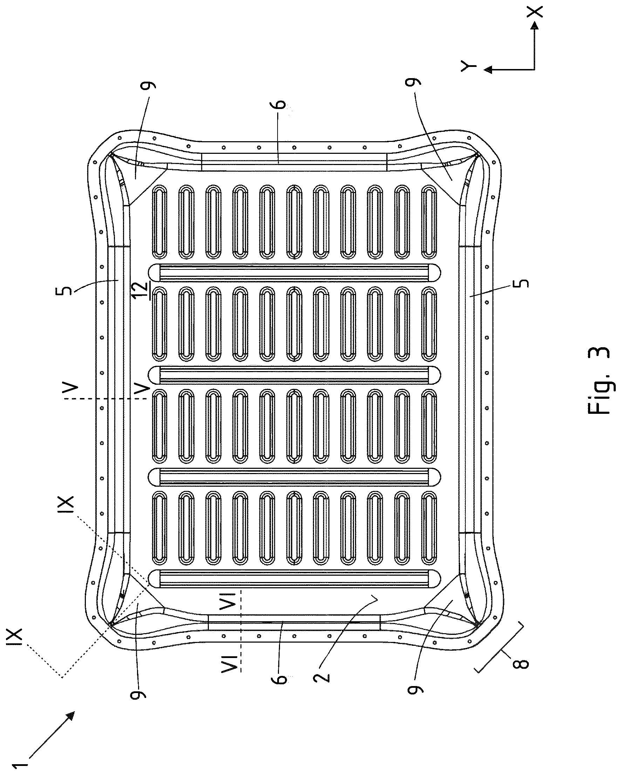

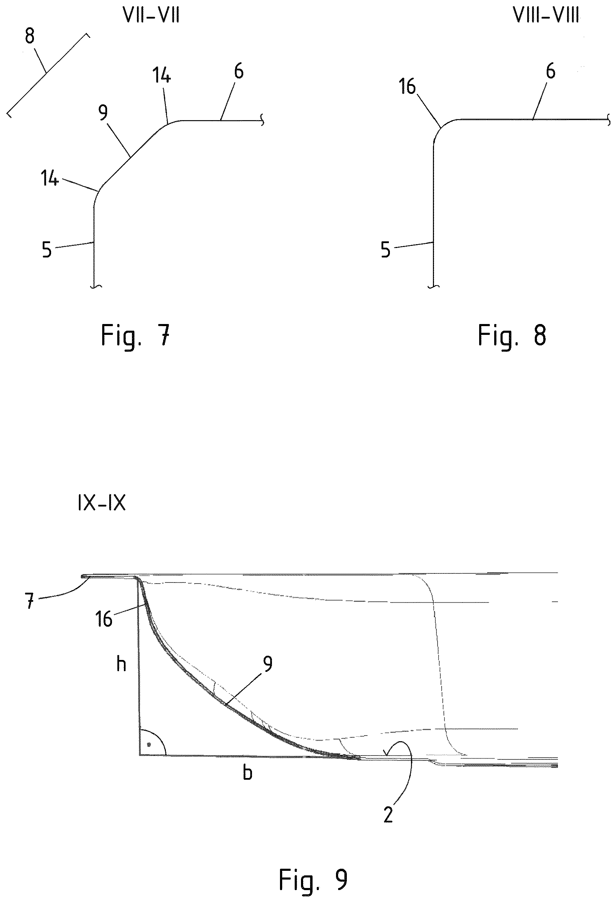

Die gekrümmte Fläche weist bevorzugt in einem Querschnitt eine Höhe und eine Breite auf. Die Querschnittsfläche liegt in Kraftfahrzeugvertikalrichtung. Die Höhe erstreckt sich somit in Kraftvertikalrichtung. Die Breite liegt in der Ebene der durch die Kraftfahrzeugquerrichtung und Kraftfahrzeuglängsrichtung aufgespannten Ebene. Das Verhältnis von Höhe zu Breite der gekrümmten Fläche beträgt bevorzugt 0,5 bis 1, insbesondere 0,65 bis 0,85. Besonders bevorzugt liegt dieses Verhältnis der gekrümmten Fläche in einem 45°-Winkel der Ecke vor. Dies bedeutet in Draufsicht, genau in der Mitte der Ecke sowie nachfolgend in Figur 3 und Figur 9 gezeigt. Das vorgenannte Verhältnis bedeutet also, dass die Breite einen größeren Wert aufweist als die Höhe.

Bevorzugt kann weiterhin der außen umlaufende Flansch in Draufsicht, also aus Kraftfahrzeugvertikalrichtung von oben betrachtet eine umlaufende rechteckige Kontur aufweisen. Dies ist dergestalt zu verstehen, dass die Batteriewanne mit einem Deckel verschließbar ist und der Deckel dann ebenfalls eine rechteckige Kontur aufweisen würde. Der Flansch kann jedoch auch eine konstante Breite aufweisen. Insbesondere mit nach außen gestellten Eckbereichen ergibt sich dann keine rechteckige Kontur des Flansches in Draufsicht, sondern der Flansch folgt den nach außen ausgestellten Eckbereichen.

Ferner kann die Batteriewanne über verschiedene Sicken oder Verstärkungsstrukturen verfügen. Diese können beispielsweise als Unterfahrschutz dienen. Entsprechend wären Sicken bevorzugt auf die Kraftfahrzeugvertikalrichtung im Einbauzustand der Batteriewanne nach unten ausgebildet, würden also nach unten aus dem Boden der Batteriewanne hervor- bzw. überstehen.

Weiterhin können beispielsweise in den Seitenwänden, insbesondere in Längsseitenwänden Öffnungen für elektrische Anschlüsse und/oder Kühlmittelleitungen eingebracht sein. Diese können beispielsweise nach dem Warmumformen und Presshärten mittels Laserbeschnitt eingebracht werden oder auch bei Bereitstellen der Platine. Der Boden der Batteriewanne kann weiterhin eine Kühlkanalstruktur aufweisen. Diese kann einstückig durch ein Sickenbild eingeprägt sein und dann mit einem Schließblech verschlossen sein.

Weiterhin bevorzugt kann auch ein Deckel, mit dem die Batteriewanne verschlossen wird, eine Kühlkanalstruktur aufweisen. Die vorliegende Erfindung würde in diesem Fall dann eine Batteriewannenanordnung aufweisen, eine Batteriewanne und eine diese verschließenden Deckel umfassen. Der Deckel wird dann unter Verwendung eines Dichtmittels auf den Flansch aufgesetzt und gefügt, beispielsweise verschraubt.

Weitere Vorteile, Merkmale, Eigenschaften und Aspekte der vorliegenden Erfindung sind Gegenstand der nachfolgenden Beschreibung. Bevorzugte Ausführungsformen sind als Figur dargestellt. Diese dienen dem einfachen Verständnis der Erfindung. Die einzelnen Ausführungsbeispiele können beliebig untereinander kombiniert werden, ohne dabei den Offenbarungsgehalt zu verlassen. Es zeigen
- Figur 1: eine erfindungsgemäße Batteriewanne in perspektivischer Ansicht,
- Figur 2: die perspektivische Ansicht von unten,
- Figur 3: eine Draufsicht der erfindungsgemäßen Batteriewanne,
- Figur 4: die erfindungsgemäße Batteriewanne in einer Seitenansicht,
- Figur 5: Schnittlinie V-V zu Figur 3,
- Figur 6: Schnittlinie VI-VI zu Figur 3,
- Figur 7: horizontaler Schnitt durch einen Eckbereich,
- Figur 8: horizontaler Schnitt durch einen Eckbereich und
- Figur 9: eine Längsschnittansicht durch einen Eckbereich gemäß der Schnittlinie IX-IX aus Figur 3.

In den Figuren werden für gleiche oder ähnliche Bauteile dieselben Bezugszeichen verwendet, auch wenn eine wiederholte Darstellung oder Beschreibung aus Vereinfachungsgründen entfällt.

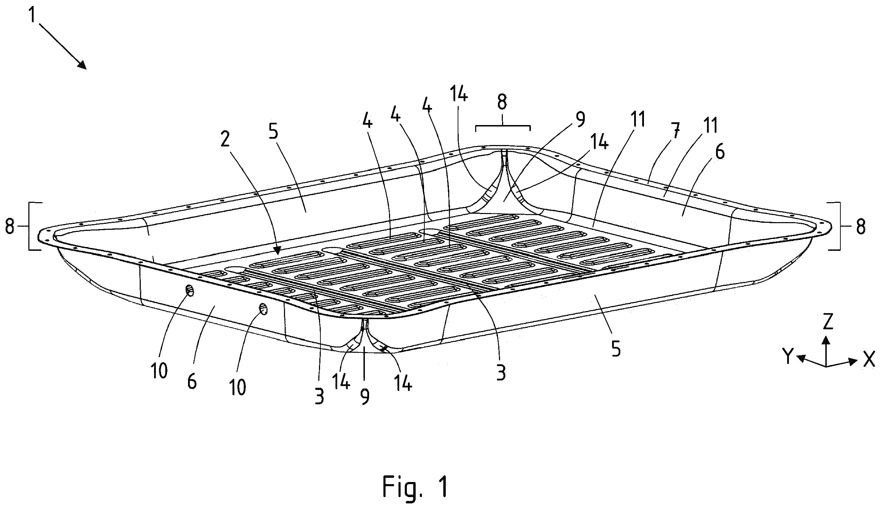

Figur 1 zeigt eine erfindungsgemäße Batteriewanne 1 in perspektivischer Ansicht. Die Batteriewanne 1 weist einen Boden 2 auf. Der Boden 2 erstreckt sich maßgeblich in einer Ebene in Kraftfahrzeuglängsrichtung X und Kraftfahrzeugquerrichtung Y. In dem Boden 2 sind verschiedene Versteifungsgeometrien ausgebildet. Beispielsweise sind Querstreben 3 in Form von Sicken 4 ausgebildet. Diese sind auf die Kraftfahrzeugvertikalrichtung Z bezogen nach unten ausgebildet. Ferner sind weitere Versteifungssicken 4 eingeprägt. Diese sind in einen Innenraum der Batteriewanne 1 ragend. Von dem Boden 2 aus erstrecken sich Seitenwände in Form von zwei Längsseitenwänden 5. Die Längsseitenwände 5 sind in Kraftfahrzeuglängsrichtung X orientiert verlaufend. Darüber hinaus sind zwei Querseitenwände 6 vorhanden. Die Querseitenwände 6 sind bezogen auf die Kraftfahrzeuglängsrichtung X stirn- und heckseitig angeordnet und verlaufen selbst in Kraftfahrzeugquerrichtung Y. An der Oberkante der Seitenwände ist außen umlaufend ein Flansch 7 ausgebildet, der nach außen absteht. Der Flansch 7 liegt selber in einer Ebene aufgespannt durch die Kraftfahrzeugquer- und -längsrichtung X, Y. Die Längs- und Querseitenwände 5, 6 sind jeweils über einen Eckbereich 8 miteinander verbunden. In dem Eckbereich 8 ist eine von dem Boden 2 aus verlaufende gekrümmte Fläche 9 ausgebildet. Die Fläche selbst ist eine zweidimensional gekrümmte Fläche 9 und verläuft zylinderabschnittsförmig mit jedoch variierendem Radius. Die gekrümmte Fläche 9 erstreckt sich dabei nicht über die gesamte Höhe der Batteriewanne 1, sondern bevorzugt über weniger als 85 % der Höhe. Es können ferner Öffnungen 10 vorgesehen sein in den Seitenwänden zur Durchführung von Kühlkanälen und/oder elektrischen Anschlüssen. Die Längsseitenwände 5 und Querseitenwände 6 gehen jeweils mit einem Übergangsradius 11 von dem Boden 2 in die Seitenwand und wiederum von der Seitenwand über in den Flansch 7.

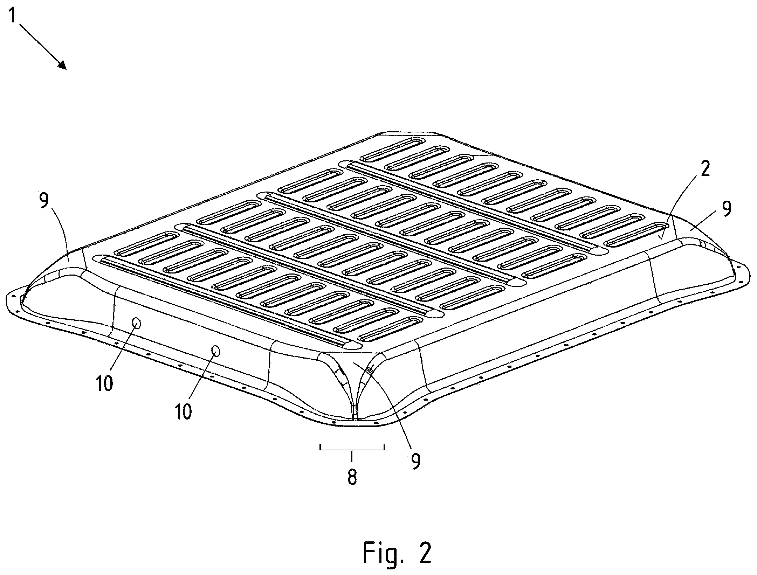

Figur 2 zeigt die perspektivische Ansicht von unten. Gut zu erkennen ist hier, dass die jeweilige gekrümmte Fläche 9 in den Eckbereichen 8 von der Ebene des Bodens 2 aus übergeht.

Figur 3 zeigt eine Draufsicht der erfindungsgemäßen Batteriewanne 1. Hierbei ist gut zu erkennen, dass die jeweiligen Eckbereiche 8 auf einen Innenraum 12 der Batteriewanne 1 bezogen, nach außen versetzt sind, insbesondere gegenüber den Längsseiten bzw. Querseiten nach außen versetzt sind.

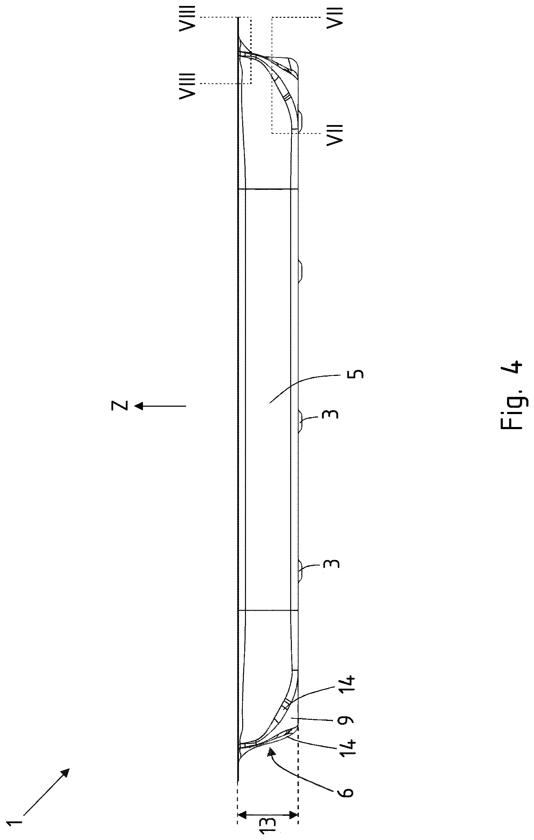

Figur 4 zeigt die erfindungsgemäße Batteriewanne 1 in einer Seitenansicht. Hier ist gut zu erkennen, dass die gekrümmte Fläche 9 sich nicht über die gesamte Höhe 13 erstreckt, sondern nur über einen Teil von weniger als 85 %. Oberhalb der gekrümmten Fläche, bezogen auf die Kraftfahrzeugvertikalrichtung Z sind dann die Querseitenwand 6 und Längsseitenwand 5 über einen Radius 14 in der XY-Ebene verbunden. Der Übergang von Längsseitenwand 5 zur gekrümmten Fläche 9 und von der gekrümmten Fläche 9 zur Querseitenwand 6 ist jeweils mit einem Übergangsradius 14 ausgebildet.

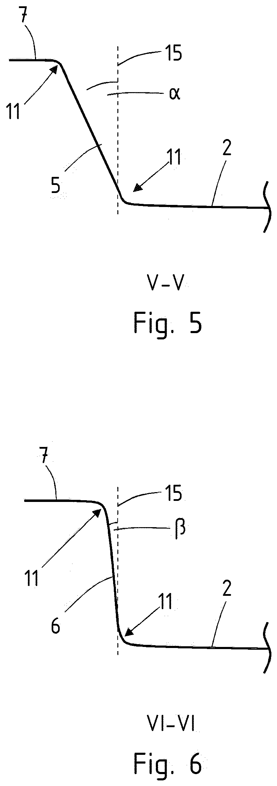

Figuren 5 und 6 zeigen Schnittlinie V-V und VI-VI aus Figur 3. Zu erkennen ist das erfindungsgemäße Merkmal, wonach der Winkel α 15 der Längsseitenwand 5 gegenüber einer Vertikalen größer, insbesondere doppelt so groß im Vergleich zum Winkel β 16 der Querseitenwand 6. Konkret weist der Winkel α einen Winkelbereich zwischen 8° und 20° auf, bevorzugt 13° bis 20°, wohingegen der Winkel β einen Winkelbereich zwischen 1° und 6°, bevorzugt zwischen 3° und 6° aufweist.

Figur 7 zeigt eine Querschnittsansicht gemäß der Schnittlinie VII-VII aus Figur 4 in Draufsicht. Dargestellt ist, dass die gekrümmte Fläche 9 des Eckbereiches 8 jeweils mit einem Übergangsradius 14 in die Querseitenwand 6 bzw. die Längsseitenwand 5 übergeht.

Figur 8 zeigt eine Querschnittsansicht gemäß der Schnittlinie VIII-VIII aus Figur 4. Hier ist zu erkennen, dass in eine auf die Vertikalrichtung Z bezogen oberen Bereich, die Querseitenwand 6 in die Längsseitenwand 5 mit einem Radius 16 übergeht. Die gekrümmte Fläche 9 ist somit gemäß der Schnittlinie von Figur 8 bereits ausgelaufen.

Figur 9 zeigt eine Längsschnittansicht durch einen Eckbereich 8 gemäß der Schnittlinie IX-IX aus Figur 3. Die gekrümmte Fläche 9 erhebt sich von der Bodenebene und geht dann über die Höhe 13 am oberen Rand über in den nach außen abstehenden Flansch 7. Das Verhältnis von Höhe h zu Breite b dieser gekrümmten Fläche 9 beträgt 0,5 bis 1, bevorzugt 0,65 bis 0,85.

### Bezugszeichen:

- 1 -: Batteriewanne
- 2 -: Boden
- 3 -: Querstrebe
- 4 -: Versteifungssicken
- 5 -: Längsseitenwand
- 6 -: Querseitenwand
- 7 -: Flansch
- 8 -: Eckbereich
- 9 -: gekrümmte Fläche
- 10 -: Öffnung
- 11 -: Übergangsradius
- 12 -: Innenraum
- 13 -: Höhe
- 14 -: Übergangsradius
- 15 -: Vertikale
- 16 -: Radius

- α -: Winkel zu 5
- β -: Winkel zu 6
- h -: Höhe der gekrümmten Fläche 9
- b -: Breite der gekrümmten Fläche 9
- X -: Kraftfahrzeuglängsrichtung
- Y -: Kraftfahrzeugquerrichtung
- Z -: Kraftfahrzeugvertikalrichtung

## Patentansprüche

1. Batteriewanne (1) für ein Elektrofahrzeug, hergestellt als warmumgeformtes und pressgehärtetes Bauteil aus einer Stahlblechplatine, aufweisend einen Boden (2) und von dem Boden (2) sich erhebende Seitenwände (5, 6) mit einem oben an der Batteriewanne (1) umlaufenden, nach außen abstehenden Flansch (7), wobei die Seitenwände (5) an Längsseiten der Batteriewanne (1) in einem Winkel α und die Seitenwände (6) an Querseiten in einem Winkel β größer 1° zu der Kraftfahrzeugvertikalrichtung (Z) im eingebauten Zustand der Batteriewanne (1) orientiert verlaufen, wobei in einem jeweiligen Eckbereich (8) der Boden (2) der Batteriewanne (2) in eine gekrümmten Fläche (9) übergeht, dergestalt, dass sich ein Übergangsradius (14) der gekrümmten Fläche (9) zu einer Querseitenwand (6) ergibt und ein Übergangsradius (14) der gekrümmten Fläche (9) zu einer Längsseitenwand (5), **dadurch gekennzeichnet, dass** der Winkel α der Längsseitenwände (5) größer ist als der Winkel β der Querseitenwände (6).

2. Batteriewanne (1) nach Anspruch 1, **dadurch gekennzeichnet, dass** der Winkel β 1° bis 6° beträgt, vorzugsweise 3° bis 6° und/oder dass der Winkel α 8° bis 20° beträgt, bevorzugt 13° bis 20°.

3. Batteriewanne (1) nach einem der vorhergehenden Ansprüche, **dadurch gekennzeichnet, dass** Eckbereiche (8) im Übergang jeweils einer Querseitenwand (6) zu einer Längsseitenwand (5), bezogen auf einen Innenraum der Batteriewanne (1), nach außen versetzt ausgeformt sind.

4. Batteriewanne (1) nach einem der vorhergehenden Ansprüche, **dadurch gekennzeichnet, dass** der Winkel α doppelt so groß ist, als der Winkel β.

5. Batteriewanne (1) nach einem der vorhergehenden Ansprüche, **dadurch gekennzeichnet, dass** die gekrümmte Fläche (9) eine abschnittsweise zylinderflächige Krümmung aufweist mit sich veränderndem Radius.

6. Batteriewanne (1) nach einem der vorhergehenden Ansprüche, **dadurch gekennzeichnet, dass** die gekrümmte Fläche (9) sich von einem Boden (2) der Batteriewanne (1), über maximal 85 % der Höhe, insbesondere über 50 % bis 75 %, ganz besonders bevorzugt 50 % bis 65 % der Höhe der Batteriewanne (1) erstreckt.

7. Batteriewanne (1) nach einem der vorhergehenden Ansprüche, **dadurch gekennzeichnet, dass** der außen umlaufende Flansch (7) in Draufsicht eine rechteckige Kontur aufweist, dergestalt, dass die Batteriewanne (1) mit einem Deckel verschließbar ist.

8. Batteriewanne (1) nach einem der vorhergehenden Ansprüche, **dadurch gekennzeichnet, dass** an den Querseiten und/oder Längsseiten (5, 6) längenabschnittsweise ein Verstärkungsprofil an die Batteriewanne (1) gekoppelt ist, insbesondere sind die Eckbereiche (8) ausgespart.

9. Batteriewanne (1) nach einem der vorhergehenden Ansprüche, **dadurch gekennzeichnet, dass** das Verstärkungsprofil mit der jeweiligen Seitenwand (5, 6) im Querschnitt ein Hohlprofil ausbildet, optional sind weitere Verstärkungselemente, insbesondere in der Hohlkammer angeordnet.

10. Batteriewanne (1) nach einem der vorhergehenden Ansprüche, **dadurch gekennzeichnet, dass** diese eine Zugfestigkeit Rm größer 1000 MPa aufweist, bevorzugt größer als 1350 MPa.

11. Batteriewanne (1) nach einem der vorhergehenden Ansprüche, **dadurch gekennzeichnet, dass** das Verhältnis von Höhe (h) zu Breite (b) der gekrümmten Fläche (9) zwischen 0,5 und 1 liegt, bevorzugt zwischen 0,65 und 0,85.

12. Batteriewanne (1) nach einem der vorhergehenden Ansprüche, **dadurch gekennzeichnet, dass** der außen umlaufende Flansch (7) eine im Wesentlichen konstante Breite besitzt.

## Claims

1. A battery tray (1) for an electric vehicle, manufactured as a thermoformed and press-hardened component from a sheet steel blank, having a base (2) and side walls (5, 6) rising from the base (2) with an outwardly projecting flange (7) circumferentially around the top of the battery tray (1), wherein the side walls (5) on longitudinal sides of the battery tray (1) are oriented at an angle α and the side walls (6) on transverse sides are oriented at an angle β, greater than 1° to the vehicle vertical direction (Z) in the installed state of the battery tray (1), wherein, in each corner area (8), the base (2) of the battery tray (2) transitions into a curved surface (9) such that a transition radius (14) of the curved surface (9) to a transverse side wall (6) is obtained and a transition radius (14) of the curved surface (9) to a longitudinal side wall (5) is obtained, **characterized in that** the angle α of the longitudinal side walls (5) is greater than the angle β of the transverse side walls (6).

2. The battery tray (1) according to claim 1, **characterized in that** the angle β is 1° to 6°, preferably 3° to 6° and/or that the angle α is 8° to 20°, preferably 13° to 20°.

3. The battery tray (1) according to any one of the preceding claims, **characterized in that** corner areas (8) in the transition of each transverse side wall (6) to a longitudinal side wall (5), with reference to an interior of the battery tray (1), are formed offset to the outside.

4. The battery tray (1) according to any one of the preceding claims, **characterized in that** the angle α is twice as large as the angle β.

5. The battery tray (1) according to any one of the preceding claims, **characterized in that** the curved surface (9) has a section-wise cylindrical curvature with a changing radius.

6. The battery tray (1) according to any one of the preceding claims, **characterized in that** the curved surface (9) extends from a base (2) of the battery tray (1) over a maximum of 85 % of the height, in particular over 50 % to 75 %, most preferably 50 % to 65 % of the height of the battery tray (1).

7. The battery tray (1) according to any one of the preceding claims, **characterized in that** the outer circumferential flange (7) has a rectangular contour in plan view, such that the battery tray (1) can be closed with a lid.

8. The battery tray (1) according to any one of the preceding claims, **characterized in that** a reinforcing profile is coupled to the battery tray (1) in longitudinal sections on the transverse sides and/or longitudinal sides (5, 6), in particular the corner areas (8) are recessed.

9. The battery tray (1) according to any one of the preceding claims, **characterized in that** the reinforcing profile forms a hollow profile in cross-section with the respective side wall (5, 6), optionally further reinforcing elements are disposed, in particular in the hollow chamber.

10. The battery tray (1) according to any one of the preceding claims, **characterized in that** it has a tensile strength Rm greater than 1000 MPa, preferably greater than 1350 MPa.

11. The battery tray (1) according to any one of the preceding claims, **characterized in that** the ratio of height (h) to width (b) of the curved surface (9) is between 0.5 and 1, preferably between 0.65 and 0.85.

12. The battery tray (1) according to any one of the preceding claims, **characterized in that** the outer circumferential flange (7) has a substantially constant width.

## Revendications

1. Bac à batterie (1) pour un véhicule électrique, fabriqué en tant que composant formé à chaud et pressé à partir d'un flanc en tôle d'acier, présentant un fond (2) et des parois latérales (5, 6) s'élevant à partir du fond (2) avec une bride (7) s'étendant vers l'extérieur et faisant le tour du bac à batterie (1), dans la partie supérieure de celui-ci, dans lequel les parois latérales (5) sur les côtés longs du bac à batterie (1) formant un angle α et les parois latérales (6) sur les côtés transversaux formant un angle β supérieur à 1° par rapport à la direction verticale de véhicule automobile (Z) à l'état monté du bac à batterie (1), dans lequel, dans une zone d'angle (8) respective, le fond (2) du bac à batterie (1) évolue en une surface courbe (9), de sorte qu'il en résulte un rayon de transition (14) de la surface courbe (9) vers une paroi latérale transversale (6) et un rayon de transition (14) de la surface courbe (9) vers une paroi latérale longitudinale (5), **caractérisé en ce que** l'angle α des parois latérales longitudinales (5) est supérieur à l'angle β des parois latérales transversales (6).

2. Bac à batterie (1) selon la revendication 1, **caractérisé en ce que** l'angle β est compris entre 1° à 6°, de préférence entre 3° à 6°, et/ou **en ce que** l'angle α est compris entre 8° à 20°, de préférence entre 13° à 20°.

3. Bac à batterie (1) selon l'une des revendications précédentes, **caractérisé en ce que** les zones d'angle (8), dans la transition respectivement d'une paroi latérale transversale (6) à une paroi latérale longitudinale (5), sont formées de manière décalée vers l'extérieur par rapport à un espace intérieur du bac à batterie (1).

4. Bac à batterie (1) selon l'une des revendications précédentes, **caractérisé en ce que** l'angle α est deux fois plus grand que l'angle β.

5. Bac à batterie (1) selon l'une des revendications précédentes, **caractérisé en ce que** la surface courbe (9) présente une courbure partiellement cylindrique, avec un rayon changeant.

6. Bac à batterie (1) selon l'une des revendications précédentes, **caractérisé en ce que** la surface courbe (9) s'étend depuis un fond (2) du bac à batterie (1) sur maximum 85 % de la hauteur, en particulier sur 50 % à 75 %, de manière particulièrement préférée 50 % à 65 % de la hauteur du bac à batterie (1).

7. Bac à batterie (1) selon l'une des revendications précédentes, **caractérisé en ce que** la bride périphérique extérieure (7) présente en vue de dessus un contour rectangulaire, de sorte que le bac à batterie (1) soit apte à fermé avec un couvercle.

8. Bac à batterie (1) selon l'une des revendications précédentes, **caractérisé en ce qu'**un profilé de renfort est relié au bac à batterie (1) de manière partiellement longitudinale sur les côtés transversaux et/ou côtés longitudinaux (5, 6), les zones d'angle (8) étant en particulier évidées.

9. Bac à batterie (1) selon l'une des revendications précédentes, **caractérisé en ce que** le profilé de renfort forme, avec la paroi latérale (5, 6) respective, un profilé creux en section transversale, d'autres éléments de renfort étant facultativement agencés, en particulier dans la chambre creuse.

10. Bac à batterie (1) selon l'une des revendications précédentes, **caractérisé en ce que** celui-ci présente une résistance à la traction Rm supérieure à 1000 MPa, de préférence supérieure à 1350 MPa.

11. Bac à batterie (1) selon l'une des revendications précédentes, **caractérisé en ce que** le rapport de la hauteur (h) et de largeur (b) de la surface courbe (9) est compris entre 0,5 et 1, de préférence entre 0,65 et 0,85.

12. Bac à batterie (1) selon l'une des revendications précédentes, **caractérisé en ce que** la bride périphérique extérieure (7) présente une largeur sensiblement constante.
